# FASCICULE DE BREVET EUROPEEN

(11) **EP 3 487 764 B1**
(45) Date de publication et mention de la délivrance du brevet: **22.04.2020**
(21) Numéro de dépôt: 17748548.9
(22) Date de dépôt: 19.07.2017
(51) Int. Cl.: B64D 33/10, F01D 25/18, F02C 7/14

(54) **NACELLE DE TURBOMOTEUR COMPORTANT UN DISPOSITIF DE REFROIDISSEMENT**
TURBINENMOTORGONDEL MIT EINER KÜHLVORRICHTUNG
TURBINE ENGINE NACELLE COMPRISING A COOLING DEVICE

(30) Priorité: 20.07.2016 FR 1656910
(43) Date de publication de la demande: 29.05.2019
(73) Titulaire: Safran Nacelles, 76700 Gonfreville-l'Orcher (FR)
(72) Inventeur: PEYRON, Vincent, 76700 Gonfreville L'Orcher (FR); GONIDEC, Patrick, 76700 Gonfreville L'Orcher (FR); BOUCHOUT, Nicolas, 76700 Gonfreville L'Orcher (FR)
(74) Mandataire: Delorme, Nicolas
(86) Numéro de dépôt international: PCT/FR2017/051967
(87) Numéro de publication internationale: WO 2018/015659

(56) Documents cités:
- EP-A2- 1 895 124
- GB-A- 2 224 080
- US-A- 2 599 879
- US-A1- 2006 042 225

## Description

L'invention concerne une nacelle de turbomoteur comportant un dispositif de refroidissement pour turbomoteur.

Plus particulièrement, l'invention concerne un dispositif de refroidissement pour turbomoteur qui impacte le moins possible les performances du turbomoteur, notamment en termes aérodynamiques.

Un aéronef est propulsé par un ou plusieurs ensembles propulsifs comprenant chacun un turbomoteur logé dans une nacelle tubulaire.

Chaque ensemble propulsif est rattaché à l'avion par un mât situé généralement sous ou sur une aile, ou au niveau du fuselage.

Une nacelle présente généralement une structure comprenant une entrée d'air en amont du moteur, une section médiane destinée à entourer une soufflante ou les compresseurs du turbomoteur et son carter, une section aval pouvant abriter des moyens d'inversion de poussée et destinée à entourer la chambre de combustion du turbomoteur, et est généralement terminée par une tuyère d'éjection dont la sortie est située en aval du turbomoteur.

De manière générale, le turbomoteur comprend un ensemble de pales entraînées en rotation par un générateur de gaz à travers un ensemble de moyens de transmission.

Un système de distribution de lubrifiant est prévu pour assurer une bonne lubrification de ces moyens de transmission et les refroidir.

Par voie de conséquence, le lubrifiant doit ensuite également être refroidi par l'intermédiaire d'un échangeur de chaleur.

Pour ce faire, une première méthode connue consiste à refroidir le lubrifiant par circulation à travers un échangeur air/huile utilisant de l'air prélevé dans la veine secondaire, flux dit froid, de la nacelle.

Le prélèvement et la circulation d'air au travers de cet échangeur, perturbe l'écoulement du flux d'air et entraîne des pertes de charges supplémentaires indésirables.

On connait également un dispositif de refroidissement qui comporte un échangeur agencé sur une paroi délimitant la veine secondaire, le fluide est refroidi par l'écoulement de l'air de la veine secondaire qui circule le long de la surface de l'échangeur.

Le document GB2224080 ou US7377100 décrit et représente un tel type de dispositif de refroidissement.

Ce type de dispositif utilise un échangeur de grande surface qui est délicat à agencer dans la veine secondaire, surtout si l'on souhaite préserver les surfaces de la nacelle traitées acoustiquement.

Aussi, on connait un type de dispositif de refroidissement qui comporte un échangeur en contact avec la paroi externe de la nacelle, comme les dispositifs décrits dans les documents EP 1895124 et FR 2 987 602.

Plus particulièrement, le document FR 2 987 602 décrit un dispositif de refroidissement qui est équipé d'un échangeur de chaleur associé à au moins un conduit de circulation formant au moins une boucle de recirculation à travers l'échangeur et comprenant au moins une zone de circulation s'étendant au moins partiellement le long du carénage externe au contact d'au moins une paroi dudit carénage externe, de manière à permettre un échange de chaleur par conduction avec l'air extérieur de la nacelle.

Bien que ce type de dispositif soit efficace en phase de vol de l'aéronef, l'utilisation des surfaces externes de la nacelle n'apporte pas ou peu de capacité de refroidissement lorsque l'aéronef est au sol.

La présente invention vise notamment à résoudre ces inconvénients et se rapporte pour ce faire à une nacelle de turbomoteur présentant une structure sensiblement tubulaire et délimitant une veine secondaire, la nacelle comprenant une virole qui forme un bord de fuite à une extrémité aval de la nacelle et qui présente une forme globalement tubulaire autour d'un axe longitudinal, la virole étant délimitée par au moins une face externe soumise à un flux d'air extérieur et une face interne soumise à un flux d'air intérieur circulant dans la veine secondaire de la nacelle, la nacelle comportant un dispositif de refroidissement qui comprend au moins un canal d'échange de chaleur qui présente une entrée et une sortie qui sont reliées à une source de fluide caloporteur par un conduit d'entrée et un conduit de sortie respectivement, la nacelle étant caractérisée en ce que le canal d'échange s'étend dans la virole.

Selon l'invention :
- ledit au moins un canal peut être délimité par une paroi externe, une paroi interne et deux parois latérales, la paroi externe pouvant être formée par la face externe de la virole, la paroi interne pouvant être formée par la face interne de la virole, ou
- ledit au moins un canal peut comprendre une paroi formée par la face interne de la virole et une autre paroi reliée à la face externe de la virole par une nervure, ou
- ledit au moins un canal peut comprendre une paroi formée par la face externe de la virole et une autre paroi reliée à la face interne de la virole par une nervure, ou
- ledit au moins un canal peut comprendre une paroi reliée à la face interne de la virole par une première nervure et reliée à la face externe de la virole par une deuxième nervure.

Les caractéristiques de la nacelle selon l'invention permettent de refroidir efficacement un fluide sans nuire aux caractéristiques aérodynamiques de la nacelle.

De plus, la virole formant bord de fuite est une zone intéressante thermiquement car la virole est soumise au flux d'air de la veine secondaire qui circule dès que le moteur est allumé, même au sol. Aussi, la virole est soumise au flux d'air externe de la nacelle dès que l'avion avance et pendant toute la phase de vol, ce qui permet de compenser la baisse d'efficacité des surfaces d'échange thermique quand l'avion évolue à une altitude plus élevée.

On estime que l'utilisation de la virole comme échangeur thermique permet de réduire de 20% la surface de l'échangeur par rapport à un échangeur installé uniquement dans la veine secondaire.

En outre, la virole est une zone qui est généralement non-traitée accoustiquement ce qui permet de rendre à nouveau disponible pour du traitement acoustique les zones où sont habituellement installés les échangeurs surfaciques, notamment en amont de l'inverseur de poussée.

Selon un exemple de réalisation, le canal d'échange s'étend de façon circonférentielle autour de l'axe de la virole.

Cette caractéristique permet de réaliser la virole par un procédé du type extrusion.

Selon un autre exemple de réalisation, le canal d'échange est délimité par une pluralité de parois, au moins une desdites parois étant formée par une des faces de la virole.

Selon cette caractéristique, les faces du canal sont en contact direct avec le flux d'air extérieur ou le flux d'air de la veine secondaire.

Selon un autre exemple de réalisation, une des parois du canal est formée par la face interne de la virole, et en ce qu'une autre paroi du canal est reliée sur la face externe opposée de la virole par une nervure.

Cette caractéristique permet de protéger les canaux d'éventuelles perforations.

Selon un autre exemple de réalisation, une des parois du canal est formée par la face externe de la virole, et en ce qu'une autre paroi du canal est reliée sur la face interne opposée de la virole par une nervure.

Selon une variante de réalisation de l'invention, la face interne de la virole est percée d'une pluralité de trousqui débouchent dans au moins une cavité de la virole formant ainsi un résonateur acoustique.

Cette variante apporte des caractéristiques d'absorption acoustique à la virole.

Selon un autre exemple de réalisation, la largeur du canal est comprise entre un et cent millimètres.

Selon un exemple de réalisation, le dispositif de refroidissement comporte :
- une pluralité de canaux d'échange,
- un collecteur d'entrée qui est interposé entre le conduit d'entrée et l'entrée de chaque canal d'échange pour alimenter chaque canal avec le fluide caloporteur à refroidir, et
- un collecteur de sortie qui est interposé entre le conduit de sortie et la sortie de chaque canal d'échange pour collecter le fluide caloporteur refroidi.

Selon un autre exemple de réalisation, le conduit d'entrée et le conduit de sortie sont extensibles et sont adaptés pour permettre un écartement relatif de la virole par rapport à la source de fluide caloporteur.

Selon un autre exemple de réalisation, le dispositif de refroidissement comporte une pluralité de premiers canaux d'échanges et une pluralité de seconds canaux d'échange qui sont agencés en alternance en contact de la face externe et en contact de la face interne de la virole, au moins une desdites parois des premiers canaux appartenant à la face externe de la virole et au moins une desdites parois des seconds canaux appartenant à la face interne de la virole.

Selon un autre exemple de réalisation, la virole est susceptible d'être obtenue par un procédé de fabrication du type par extrusion.

Dans un mode de réalisation, ledit au moins un canal peut être rapporté sur la virole.

D'autres caractéristiques et avantages de l'invention apparaîtront à la lecture de la description détaillée qui suit pour la compréhension de laquelle on se reportera aux dessins annexés dans lesquels :
- la figure 1 est une vue en section longitudinale qui illustre une nacelle pour turbomoteur qui comporte un dispositif de refroidissement, selon l'invention ;
- la figure 2 est une vue schématique qui illustre le dispositif de refroidissement selon l'invention ;
- la figure 3 est une vue de détail de la figure 1, qui illustre une virole aval qui comporte des canaux d'échange de chaleur du dispositif de refroidissement ;
- la figure 4 est une vue de détail de la figure 1 qui illustre la virole de la nacelle comportant les canaux d'échange de chaleur, selon un premier mode de réalisation de l'invention ;
- la figure 5 est une vue de détail de la figure 1 qui illustre la virole de la nacelle comportant les canaux d'échange de chaleur, selon un deuxième mode de réalisation de l'invention ;
- la figure 6 est une vue de détail de la figure 1 qui illustre la virole de la nacelle comportant les canaux d'échange de chaleur, selon un troisième mode de réalisation de l'invention ;
- la figure 7 est une vue de détail de la figure 1 qui illustre la virole de la nacelle comportant les canaux d'échange de chaleur, selon un quatrième mode de réalisation de l'invention ;
- la figure 8 est une vue de détail de la figure 1 qui illustre la virole de la nacelle comportant les canaux d'échange de chaleur, selon un cinquième mode de réalisation de l'invention ;
- la figure 9 est une vue de détail de la figure 1 qui illustre la virole de la nacelle comportant les canaux d'échange de chaleur, selon un sixième mode de réalisation de l'invention.

Pour clarifier la description et les revendications, on adoptera à titre non limitatif la terminologie longitudinal, vertical et transversal en référence au trièdre L, V, T indiqué aux figures, dont l'axe L est parallèle à l'axe A de la nacelle.

Sur l'ensemble de ces figures, des références identiques ou analogues représentent des organes ou ensembles d'organes identiques ou analogues.

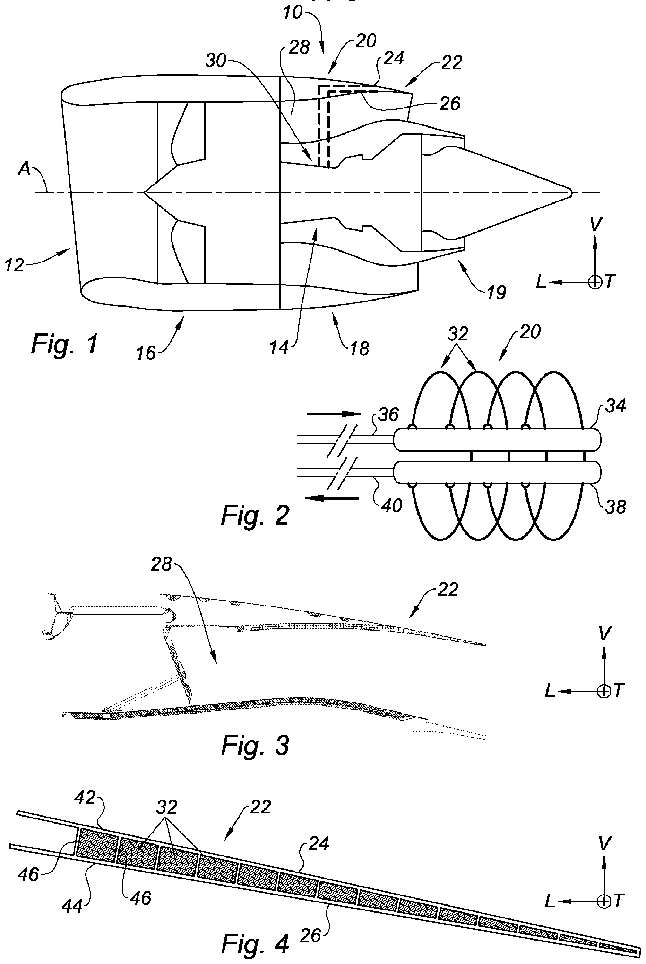

A noter que dans la présente demande de brevet, les termes « amont » et «aval » doivent s'entendre par rapport à la circulation du flux d'air à l'intérieur de l'ensemble propulsif formé par la nacelle et le turbomoteur, c'est-à-dire de la gauche vers la droite selon la figure 1.

On a représenté à la figure 1 une nacelle 10 qui s'étend longitudinalement suivant un axe A et qui présente une structure globalement tubulaire.

La nacelle 10 comprend une entrée d'air 12 agencée en amont d'un turbomoteur 14, une section médiane 16 destinée à entourer une soufflante ou les compresseurs du turbomoteur 14 et son carter, une section aval 18 pouvant abriter des moyens d'inversion de poussée et destinée à entourer la chambre de combustion du turbomoteur 14, et une tuyère 19 d'éjection dont la sortie est située en aval du turbomoteur 14.

La nacelle 10 comporte un dispositif 20 de refroidissement, le dispositif 20 comprenant une virole 22 qui forme un bord de fuite et qui est agencée à une extrémité aval de la nacelle 10.

La virole 22 présente une forme globalement cylindrique autour de l'axe A longitudinal, et plus précisément une forme tronconique de section décroissante suivant une direction d'amont en aval, comme on peut le voir à la figure 4.

Plus particulièrement, la virole 22 est délimitée par une face externe 24 qui est soumise à un flux d'air extérieur et par une face interne 26 qui est soumise à un flux d'air intérieur circulant dans la veine secondaire 28 de la nacelle 10.

Le dispositif 20 de refroidissement comporte une pluralité de canaux 32 d'échange de chaleur, visibles à la figure 4, qui s'étendent dans la virole 22 et qui sont traversés par un fluide caloporteur pour dissiper les calories acheminées par le fluide caloporteur.

A cet effet, comme on peut le voir à la figure 2, les canaux 32 d'échange présentent chacun une entrée, les entrées des canaux 32 sont reliées entre elles par un collecteur d'entrée 34, le collecteur d'entrée 34 étant relié sur une source 30 de fluide caloporteur par un conduit d'entrée 36.

De même, les canaux 32 d'échange présentent chacun une sortie, les sorties des canaux 32 sont reliées entre elles par un collecteur de sortie 38, le collecteur de sortie 38 étant relié sur la source 30 de fluide caloporteur par un conduit de sortie 40.

Les canaux 32 d'échange peuvent être réalisés, par exemple par usinage, directement dans la virole 22, par exemple dans la face interne 26 et/ou la face externe 24. Alternativement, comme illustré dans l'exemple de la figure 2, les canaux 32 d'échange peuvent consister en un ou plusieurs éléments réalisés indépendamment de la virole 22 et qui peuvent ensuite être fixés sur la virole 22. Autrement dit, les canaux 32 d'échange peuvent être rapportés sur la virole 22.

Le fluide caloporteur est par exemple un lubrifiant qui emmagasine les calories diffusées par le turbomoteur 14 et/ou ses accessoires.

On entend par « source de fluide caloporteur » un point de puisage du fluide caloporteur.

Le conduit d'entrée 36 et le conduit de sortie 40 sont extensibles et sont adaptés pour permettre un écartement relatif de la virole 22 par rapport à la source 30 de fluide caloporteur.

A cet effet, le conduit d'entrée 36 et le conduit de sortie 40 peuvent être réalisés en tuyau souple avec une sur-longueur coudée qui permet le déploiement du conduit.

Aussi, le conduit d'entrée 36 et le conduit de sortie 40 peuvent être réalisés au moyen d'un conduit télescopique.

Cette caractéristique est nécessaire notamment lorsque le dispositif 20 de refroidissement équipe une nacelle 10 qui comporte un inverseur de poussée à capot coulissant, comme le capot coulissant représenté à la figure 3.

En effet, le capot coulissant porte la virole 22 qui est alors mobile en translation par rapport à la source 30 de fluide caloporteur qui est agencée sur une partie fixe de la nacelle 10.

Le fluide caloporteur est entraîné en circulation depuis la source 30, jusqu'aux canaux 32, au moyen d'un dispositif de pompage (non représenté).

Aussi, chaque canal 32 d'échange s'étend de façon circonférentielle autour de l'axe A de la virole 22.

La largeur de chaque canal 32 est comprise entre un et cent millimètres. Le terme « largeur » doit s'entendre comme la largeur suivant la section longitudinale du canal concerné.

Par soucis d'efficacité, la virole 22 et les canaux 32 sont réalisés dans un matériau qui est adapté pour dissipé efficacement les calories.

Selon un exemple de réalisation préféré, la virole 22 et les canaux 32 sont réalisés en aluminium.

Toutefois, à titre non limitatif, la virole 22 et les canaux 32 peuvent également être réalisés en matériau composite ou en titane.

Selon un premier mode de réalisation de l'invention illustré à la figure 4, le dispositif 20 de refroidissement comporte quatorze canaux 32 qui sont accolés entre eux suivant une direction longitudinale et qui s'étendent autour de l'axe A de la virole 22.

Selon ce premier mode de réalisation, chaque canal 32 présente une section globalement parallélépipédique et chaque canal 32 est délimité par une paroi externe 42, une paroi interne 44 et deux parois latérales 46 qui forment des cloisons de séparation des canaux 32 voisins.

La paroi externe 42 de chaque canal 32 étant formée par la face externe 24 de la virole 22, de sorte que la paroi externe 42 de chaque canal 32 est soumise directement à un flux d'air extérieur à la nacelle 10.

A l'inverse, la paroi interne 44 de chaque canal 32 est formée par la face interne 26 de la virole 22, de sorte que la paroi interne 44 de chaque canal 32 est soumise à un flux d'air de la veine secondaire 28 de la nacelle 10.

Selon ce premier mode de réalisation, on observe que le fluide caloporteur qui circule à travers les canaux 32 est refroidi simultanément par le flux d'air de la veine secondaire 28 et par l'air externe de la nacelle 10.

Ainsi, le dispositif 20 de refroidissement selon l'invention est efficace au cours des phases de vol de l'aéronef et au cours des phases au sol de l'aéronef.

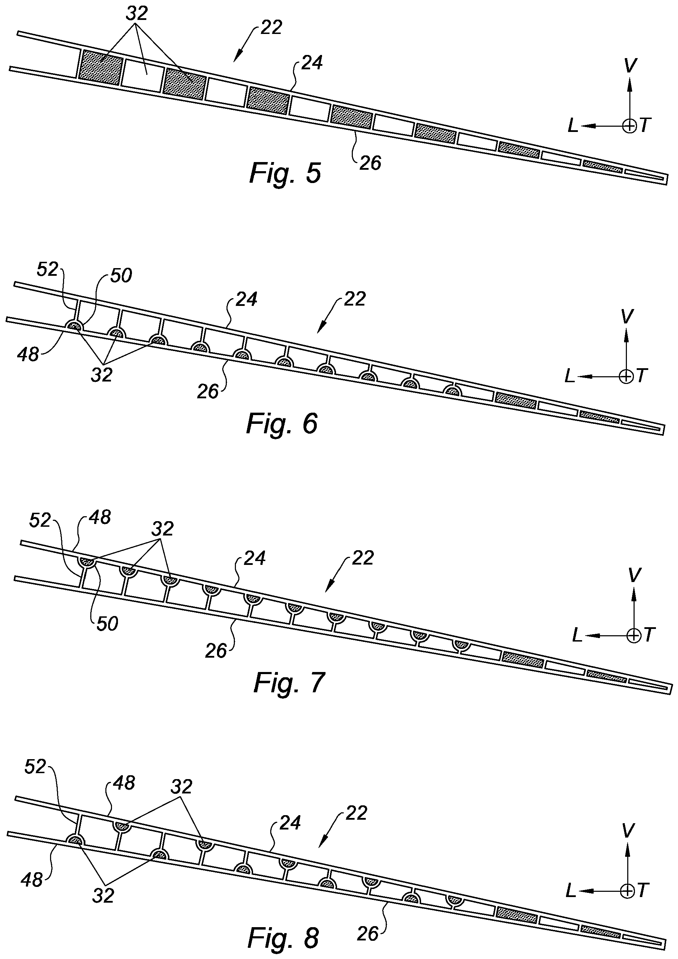

On a représenté à la figure 5 un deuxième mode de réalisation de l'invention, qui est similaire au premier mode de réalisation, à la différence que le fluide caloporteur circule dans un canal 32 sur deux, chaque canal plein étant suivi par un canal 32 vide, suivant une direction longitudinale.

Les températures des parois des canaux 32 qui ne sont pas au contact du fluide caloporteur restent relativement élevées grâce au phénomène de conduction, les surfaces des canaux vides continuent donc à participer de façon efficace à l'échange thermique avec les flux d'air de la veine secondaire et les flux d'air externe.

Cette caractéristique permet de limiter le volume de fluide caloporteur et donc la masse de la virole 22.

Ainsi, dans des modes de réalisation tels qu'illustrés aux figures 4 et 5, au moins un canal est délimité par une paroi externe 42, une paroi interne 44 et deux parois latérales 46, la paroi externe 42 étant formée par la face externe 24 de la virole 22, la paroi interne 44 étant formée par la face interne 26 de la virole 22.

Selon un troisième mode de réalisation de l'invention illustré à la figure 6, chaque canal 32 ne comporte qu'une seule paroi qui appartient à une des faces de la virole 22.

Plus particulièrement, chaque canal 32 présente une section globalement semi-circulaire qui est délimitée par une paroi globalement plane 48 et une paroi semi-circulaire 50.

Selon ce troisième mode de réalisation, la paroi plane 48 de chaque canal 32 est formée par la face interne 26 de la virole 22, de sorte que la paroi plane 48 de chaque canal 42 est soumise au flux d'air de la veine secondaire 28 de la nacelle 10.

De plus, chaque canal 32 est associé à une nervure 52 qui s'étend suivant le canal associé et qui relie le canal d'échange sur une face opposée de la virole 22, ici sur la face externe 24 de la virole 22.

Les nervures 52 permettent de transférer les calories par conduction depuis le fluide caloporteur, jusqu'à la face externe 24 de la virole 22, afin que la face externe 24 participe également de façon efficace à l'échange thermique.

Cette conception permet de limiter le volume de fluide embarqué dans la virole 22 et donc la masse de la virole 22.

Le dispositif de refroidissement selon ce troisième mode de réalisation permet également d'éviter qu'une perforation de la face externe 24 endommage les canaux 32 et entraine une fuite de fluide.

De plus, l'air circulant à travers la veine secondaire 28 étant plus chaud que l'air à l'extérieur de la nacelle 10, cette conception permet à la face interne 26 de la virole 22 de présenter une température supérieure à celle de la face externe 24, ce qui permet d'homogénéiser le delta de température entre le flux d'air et la face associée de la virole 22.

Ainsi, dans un mode de réalisation tel qu'illustré à la figure 6, au moins un canal 32 comprend une paroi 48 formée par la face interne 26 de la virole 22 et une autre paroi 50 reliée à la face externe 24 de la virole 22 par une nervure 52.

On a représenté à la figure 7 un quatrième mode de réalisation de l'invention, qui est similaire au troisième mode de réalisation, à la différence que la paroi plane 48 de chaque canal 32 est formée par la face externe 24 de la virole 22, de sorte que la paroi plane 48 de chaque canal 42 est soumise à un flux d'air extérieur à la nacelle 10.

Ainsi, dans un mode de réalisation tel qu'illustré à la figure 7, au moins un canal 32 comprend une paroi 48 formée par la face externe 24 de la virole 22 et une autre paroi 50 reliée à la face interne 26 de la virole 22 par une nervure 52.

Un cinquième mode de réalisation de l'invention, illustré à la figure 8, comporte une série de canaux 32 de section semi-circulaire et reprend les caractéristiques des deux modes de réalisation précédemment décrits.

Selon ce cinquième mode de réalisation, la paroi plane 48 d'une première série de canaux 32 est formée par la face interne 26 de la virole 22, et la paroi plane 48 d'une seconde série de canaux 32 est formée par la face externe 24 de la virole 22.

Les canaux 32 de la première série sont agencés en alternance régulière avec les canaux 32 de la seconde série, comme le montre la figure 8.

Aussi, la nervure 52 de chaque canal 32 est reliée sur la face de la virole 22 opposée à la face plane 48 du canal 32 concerné.

Cette conception permet d'optimiser les températures de la face externe 24 et de la face interne 26 de la virole 22 afin de maximiser la puissance thermique échangée via les canaux 32.

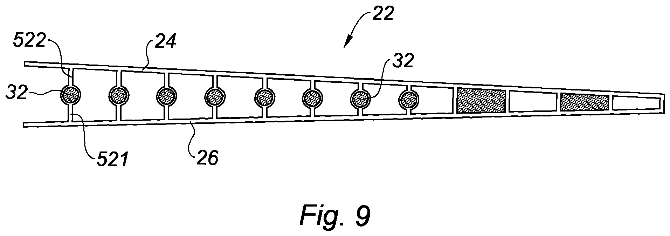

Dans un sixième mode de réalisation de l'invention, illustré à la figure 9, le dispositif de refroidissement comporte une série de canaux 32 comprenant chacun une paroi reliée à la face interne 26 de la virole 22 par une première nervure 521 et reliée à la face externe 24 de la virole 22 par une deuxième nervure 522. Dans cet exemple, les canaux 32 ont une section circulaire.

Selon un autre aspect, un avantage de l'invention concerne la réalisation de la virole 22.

En effet, la virole 22 peut être obtenue par un procédé de fabrication du type extrusion qui permet d'obtenir un profilé qui est ensuite cintré en forme de virole 22.

Aussi, la virole 22 peut être obtenue directement par pultrusion.

Selon une variante de réalisation de l'invention non représentée, la face interne 26 de la virole 22 est percée d'une pluralité de trous.

Les trous sont réalisés de façon à ne pas percer les canaux 32.

Ainsi, cette variante n'est pas adaptée au premier mode de réalisation de l'invention représenté à la figure 4 puisque les canaux 32 couvrent une grande partie de la face interne 26 de la virole 22.

A l'inverse, selon les autres modes de réalisation, les trous sont agencés de façon à déboucher dans des cavités formant ainsi des résonateurs acoustiques qui absorbent une partie du bruit émis par le moteur.

Ces cavités sont par exemple formées par des canaux 32 vides, dans lesquels le fluide ne circule pas.

Le volume important des canaux 32 vides offre des caractéristiques d'absorption acoustique intéressantes.

La présente description de l'invention est donnée à titre d'exemple non limitatif.

## Revendications

1. Nacelle (10) de turbomoteur (14) présentant une structure sensiblement tubulaire et délimitant une veine secondaire (28), la nacelle (10) comprenant une virole (22) qui forme un bord de fuite à une extrémité aval de la nacelle (10) et qui présente une forme globalement tubulaire autour d'un axe(A) longitudinal, la virole (22) étant délimitée par au moins une face externe (24) soumise à un flux d'air extérieur et une face interne (26) soumise à un flux d'air intérieur circulant dans la veine secondaire (28) de la nacelle (10), la nacelle (10) comportant un dispositif (20) de refroidissement qui comprend au moins un canal (32) d'échange de chaleur traversé par un fluide caloporteur pour dissiper des calories acheminées par le fluide caloporteur, l'au moins un canal (32) d'échange présentant une entrée et une sortie qui sont reliées à une source (30) de fluide caloporteur par un conduit d'entrée (36) et un conduit de sortie (40) respectivement, la nacelle (10) étant **caractérisée en ce que** ledit au moins un canal (32) d'échange s'étend dans la virole (22), et **en ce que** :
- ledit au moins un canal (32) est délimité par une paroi externe (42), une paroi interne (44) et deux parois latérales (46), la paroi externe (42) étant formée par la face externe (24) de la virole (22), la paroi interne (44) étant formée par la face interne (26) de la virole (22), ou
- ledit au moins un canal (32) comprend une paroi formée par la face interne (26) de la virole (22) et une autre paroi reliée à la face externe (24) de la virole (22) par une nervure (52), ou
- ledit au moins un canal (32) comprend une paroi formée par la face externe (24) de la virole (22) et une autre paroi reliée à la face interne (26) de la virole (22) par une nervure (52), ou
- ledit au moins un canal (32) comprend une paroi reliée à la face interne (26) de la virole (22) par une première nervure (521) et reliée à la face externe (24) de la virole (22) par une deuxième nervure (522).

2. Nacelle (10) de turbomoteur (14) selon la revendication 1, **caractérisée en ce que** le canal (32) d'échange s'étend de façon circonférentielle autour de l'axe (A) de la virole (22).

3. Nacelle (10) de turbomoteur (14) selon la revendication 1 ou 2, **caractérisée en ce que** la face interne (26) de la virole (22) est percée d'une pluralité de trous qui débouchent dans au moins une cavité de la virole (22) formant un résonateur acoustique.

4. Nacelle (10) de turbomoteur (14) selon l'une quelconque des revendications précédentes, **caractérisée en ce que** la largeur du canal (32) est comprise entre un et cent millimètres.

5. Nacelle (10) de turbomoteur (14) selon l'une quelconque des revendications précédentes, **caractérisée en ce que** le dispositif (20) de refroidissement comporte :
- une pluralité de canaux (32) d'échange,
- un collecteur d'entrée (34) qui est interposé entre le conduit d'entrée (36) et l'entrée de chaque canal (32) d'échange pour alimenter chaque canal (32) avec le fluide caloporteur à refroidir, et
- un collecteur de sortie (38) qui est interposé entre le conduit de sortie (40) et la sortie de chaque canal (32) d'échange pour collecter le fluide caloporteur refroidi.

6. Nacelle (10) de turbomoteur (14) selon la revendication 5, **caractérisée en ce que** le conduit d'entrée (36) et le conduit de sortie (40) sont extensibles et sont adaptés pour permettre un écartement relatif de la virole (22) par rapport à la source de fluide caloporteur.

7. Nacelle (10) de turbomoteur (14) selon l'une quelconque des revendications précédentes, **caractérisée en ce que** le dispositif (20) de refroidissement comporte une pluralité de premiers canaux (32) d'échanges et une pluralité de seconds canaux (32) d'échange qui sont agencés en alternance en contact de la face externe (24) et en contact de la face interne (26) de la virole (22), au moins une desdites parois (42, 44, 46, 48) des premiers canaux (32) appartenant à la face externe (24) de la virole (22) et au moins une desdites parois (42, 44, 46, 48) des seconds canaux (32) appartenant à la face interne (26) de la virole (22).

8. Nacelle (10) de turbomoteur (14) selon l'une quelconque des revendications précédentes, **caractérisée en ce que** la virole (22) est susceptible d'être obtenue par un procédé de fabrication du type extrusion.

9. Nacelle (10) de turbomoteur (14) selon l'une quelconque des revendications précédentes, **caractérisée en ce que** ledit au moins un canal (32) est rapporté sur la virole (22).

## Patentansprüche

1. Gondel (10) eines Turbinenmotors (14), die eine im Wesentlichen rohrförmige Struktur aufweist und einen sekundären Durchgang (28) begrenzt, wobei die Gondel (10) eine Manschette (22) umfasst, die eine Hinterkante an einem nachgelagerten Ende der Gondel (10) bildet, und die im Wesentlichen eine Rohrform um eine Längsachse (A) aufweist, wobei die Manschette (22) durch mindestens eine Außenseite (24) begrenzt ist, die einem äußeren Luftfluss unterzogen ist, und eine Innenseite (26), die einem inneren Luftfluss unterzogen ist, der im sekundären Durchgang (28) der Gondel (10) zirkuliert, wobei die Gondel (10) eine Kühlvorrichtung (20) umfasst, die mindestens einen Wärmetauschkanal (32) umfasst, der von einem Wärmeträgerfluid durchquert wird, um Kalorien abzuleiten, die vom Wärmeträgerfluid befördert werden, wobei der mindestens eine Tauschkanal (32) einen Eingang und einen Ausgang aufweist, die mit einer Wärmeträgerfluidquelle (30) durch jeweils eine Eingangsleitung (36) und eine Ausgangsleitung (40) verbunden sind, wobei die Gondel (10) **dadurch gekennzeichnet ist, dass** sich der mindestens eine Tauschkanal (32) im Manschette (22) erstreckt, und dadurch, dass
- der mindestens eine Kanal (32) durch eine Außenwand (42), eine Innenwand (44) und zwei Seitenwände (46) begrenzt ist, wobei die Außenwand (42) durch die Außenseite (24) der Manschette (22) gebildet ist, wobei die Innenwand (44) durch die Innenseite (26) der Manschette (22) gebildet ist, oder
- der mindestens eine Kanal (32) eine Wand umfasst, die von der Innenseite (26) der Manschette (22) gebildet ist, und eine weitere Wand, die mit der Außenseite (24) der Manschette (22) durch eine Rippung (52) verbunden ist, oder
- der mindestens eine Kanal (32) eine Wand umfasst, die von der Außenseite (24) der Manschette (22) gebildet ist, und eine weitere Wand, die mit der Innenseite (26) der Manschette (22) durch eine Rippung (52) verbunden ist, oder
- der mindestens eine Kanal (32) eine Wand umfasst, die mit der Innenseite (26) der Manschette (22) durch eine erste Rippung (521) verbunden ist, die mit der Außenseite (24) der Manschette (22) durch eine zweite Rippung (522) verbunden ist.

2. Gondel (10) eines Turbinenmotors (14) nach Anspruch 1, **dadurch gekennzeichnet, dass** sich der Tauschkanal (32) umfänglich um die Achse (A) der Manschette (22) erstreckt.

3. Gondel (10) eines Turbinenmotors (14) nach Anspruch 1 oder 2, **dadurch gekennzeichnet, dass** die Innenseite (26) der Manschette (22) von einer Vielzahl von Löchern durchstochen ist, die in mindestens einen Hohlraum der Manschette (22) münden und einen akustischen Resonator bilden.

4. Gondel (10) eines Turbinenmotors (14) nach einem der vorhergehenden Ansprüche, **dadurch gekennzeichnet, dass** die Breite des Kanals (32) zwischen einem und hundert Millimeter liegt.

5. Gondel (10) eines Turbinenmotors (14) nach einem der vorhergehenden Ansprüche, **dadurch gekennzeichnet, dass** die Kühlvorrichtung (20) Folgendes umfasst:
- eine Vielzahl von Tauschkanälen (32),
- einen Einlassverteiler (34), das zwischen die Eingangsleitung (36) und den Eingang jedes Tauschkanals (32) gestellt ist, um jeden Kanal (32) mit dem zu kühlenden Wärmeträgerfluid zu versorgen; und
- einen Auslassverteiler (38), der zwischen die Ausgangsleitung (40) und den Ausgang jedes Tauschkanals (32) gestellt ist, um das gekühlte Wärmeträgerfluid zu sammeln.

6. Gondel (10) eines Turbinenmotors (14) nach Anspruch 5, **dadurch gekennzeichnet, dass** die Eingangsleitung (36) und die Ausgangsleitung (40) erweitert werden können und ausgelegt sind, um eine relative Beabstandung der Manschette (22) mit Bezug auf die Wärmeträgerfluidquelle zu ermöglichen.

7. Gondel (10) eines Turbinenmotors (14) nach einem der vorhergehenden Ansprüche, **dadurch gekennzeichnet, dass** die Kühlvorrichtung (20) eine Vielzahl von ersten Tauschkanälen (32) und eine Vielzahl von zweiten Tauschkanälen (32) umfasst, die abwechselnd in Kontakt mit der Außenfläche (24) und in Kontakt mit der Innenfläche (26) der Manschette (22) angeordnet sind, wobei mindestens eine der Wände (42, 44, 46, 48) der ersten Kanäle (32) zur Außenseite (24) der Manschette (22) gehört und mindestens eine der Wände (42, 44, 46, 48) der zweiten Kanäle (32) zur Innenseite (26) der Manschette (22) gehört.

8. Gondel (10) eines Turbinenmotors (14) nach einem der vorhergehenden Ansprüche, **dadurch gekennzeichnet, dass** die Manschette (22) durch eine Herstellungsverfahren vom Typ Extrusion erhalten werden kann.

9. Gondel (10) eines Turbinenmotors (14) nach einem der vorhergehenden Ansprüche, **dadurch gekennzeichnet, dass** der mindestens eine Kanal (32) auf die Manschette (22) aufgesetzt ist.

## Claims

1. A nacelle (10) of a turbine engine (14) having a substantially tubular structure and delimiting a secondary flow path (28), the nacelle (10) comprising a shroud (22) forming a trailing edge at a downstream end of the nacelle (10) and having a generally tubular shape about a longitudinal axis (A), the shroud (22) being delimited by at least one outer face (24) subjected to an outside air flow and an inner face (26) subjected to an inside air flow circulating in the secondary flow path (28) of the nacelle (10), the nacelle (10) comprising a cooling device (20) comprising at least one heat exchange channel (32) traversed by a heat transfer fluid to dissipate calories conveyed by the heat transfer fluid, the at least one exchange channel (32) having an inlet and an outlet connected to a source (30) of heat exchange fluid via an inlet duct (36) and an outlet duct (40) respectively, the nacelle (10) being **characterized in that** said at least one exchange channel (32) extends into the shroud (22), and **in that**:
- said at least one channel (32) is delimited by an outer wall (42), an inner wall (44) and two side walls (46), the outer wall (42) being formed by the outer face (24) of the shroud (22), the inner wall (44) being formed by the inner face (26) of the shroud (22), or
- said at least one channel (32) comprises a wall formed by the inner face (26) of the shroud (22) and another wall connected to the outer face (24) of the shroud (22) by a rib (52), or
- said at least one channel (32) comprises a wall formed by the outer face (24) of the shroud (22) and another wall connected to the inner face (26) of the shroud (22) by a rib (52), or
- said at least one channel (32) comprises a wall connected to the inner face (26) of the shroud (22) by a first rib (521) and connected to the outer face (24) of the shroud (22) by a second rib (522).

2. The nacelle (10) of the turbine engine (14) according to claim 1, **characterized in that** the exchange channel (32) extends circumferentially about the axis (A) of the shroud (22).

3. The nacelle (10) of the turbine engine (14) according to claim 1 or 2, **characterized in that** the inner face (26) of the shroud (22) is pierced with a plurality of holes which open into at least one cavity of the shroud (22) forming an acoustic resonator.

4. The nacelle (10) of the turbine engine (14) according to any one of the preceding claims, **characterized in that** the width of the channel (32) is comprised between one and one hundred millimeters.

5. La nacelle (10) of the turbine engine (14) according to any one of the preceding claims, **characterized in that** the cooling device (20) includes:
- A plurality of exchange channels (32),
- An inlet collector (34) interposed between the inlet duct (36) and the inlet of each exchange channel (32) to supply each channel (32) with the heat transfer fluid to be cooled, and
- An outlet collector (38) interposed between the outlet duct (40) and the outlet of each exchange channel (32) to collect the cooled heat transfer fluid.

6. The nacelle (10) of the turbine engine (14) according to claim 5, **characterized in that** the inlet duct (36) and the outlet duct (40) are extensible and are adapted to allow a relative spacing between the shroud (22) and the heat transfer fluid source.

7. The nacelle (10) of the turbine engine (14) according to any one of the preceding claims, **characterized in that** the cooling device (20) includes a plurality of first exchange channels (32) and a plurality of second exchange channels (32) which are arranged alternately in contact with the outer face (24) and in contact with the inner face (26) of the shroud (22), at least one of said walls (42, 44, 46, 48) of the first channels (32) belonging to the outer face (24) of the shroud (22) and at least one of said walls (42, 44, 46, 48) of the second channels (32) belonging to the inner face (26) of the shroud (22).

8. The nacelle (10) of the turbine engine (14) according to any one of the preceding claims, **characterized in that** the shroud (22) may be obtained by an extrusion-type manufacturing method.

9. The nacelle (10) of the turbine engine (14) according to any one of the preceding claims, **characterized in that** said at least one channel (32) is added onto the shroud (22).
